# EUROPÄISCHE PATENTSCHRIFT

(11) **EP 4 314 593 B1**
(45) Veröffentlichungstag und Bekanntmachung des Hinweises auf die Patenterteilung: **23.04.2025**
(21) Anmeldenummer: 22718066.8
(22) Anmeldetag: 28.03.2022
(51) Int. Cl.: F16F 15/03, F16F 7/10, F03D 13/20

(54) **TEMPERATURADAPTIVER WIRBELSTROM-ROTATIONSDÄMPFER**
TEMPERATURE-ADAPTIVE EDDY CURRENT ROTATION DAMPER
AMORTISSEUR ROTATIF À COURANTS DE FOUCAULT ADAPTATIF EN TEMPÉRATURE

(30) Priorität: 31.03.2021 EP 21020171
(43) Veröffentlichungstag der Anmeldung: 07.02.2024
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2022/025123
(87) Internationale Veröffentlichungsnummer: WO 2022/207146

(56) Entgegenhaltungen:
- EP-B1- 2 746 483
- WO-A1-2017/036581
- WO-A1-2019/029839

## Beschreibung

Die Erfindung betrifft einen Schwingungsdämpfer, insbesondere geeignet für Windkraftanlagen, welcher auf dem Wirbelstrom-Prinzip basiert und in der Weise temperaturreguliert ist, dass er die durch den erzeugten Wirbelstrom entstandene Wärme nicht nur effektiv abführen kann, sondern darüber hinaus auch den bei höheren Temperaturen auftretenden Dämpfungsverlust selbstregulierend effektiv zu kompensieren vermag.

Die Erfindung betrifft insbesondere einen Rotations-Schwingungsdämpfer, der zusammen mit einer Tilgermasse auf einer vorzugsweise gekrümmten Rollbahn entsprechend der angreifenden Schwingungskräfte bewegt wird.

Hohe und schlanke Gebäude und Anlagen sind besonderen Schwingungsverhältnissen ausgesetzt, auf welche durch technische Maßnahmen Einfluss genommen werden muss, damit keine Schäden oder vorzeitige Ermüdungsprozesse eintreten. Dies gilt insbesondere für Windkraftanlagen, die aufgrund ihrer rasanten technischen Weiterentwicklung in den letzten Jahren vermehrt auch in extremeren Gegenden (z.B. Offshore) und Höhen eingesetzt werden, und zudem immer höhere Türme aufweisen, um die dort besseren Windverhältnisse auszunutzen. Solche Windkraftanlagen müssen den an ihnen durch Wind, Wellen, Wetter und Betrieb auftretenden Kräften Stand halten, welche die Anlagen an unterschiedlichen Stellen verschieden stark belasten und den Betrieb und die Sicherheit gefährden. Es ist also notwendig die in diesen Anlagen auftretenden Schwingungen durch technische Maßnahmen gezielt und wirksam zu dämpfen. Dies geschieht mit Schwingungsdämpfern unterschiedlicher Konstruktion entsprechend der diversen unterschiedlichen Einsatzfelder und Aufgaben.

Darunter fallen auch im Stand der Technik bekannte Schwingungsdämpfer, die nach dem Wirbelstromprinzip arbeiten. Die Funktionsweise solcher Dämpfer basiert darauf, dass in einem elektrischen Leiter (Leiterelement), der sich durch ein sich änderndes Magnetfelds (Magnetelement / Permanentmagnete) bewegt, ein Strom induziert wird. Dieser induzierte Strom, auch Wirbelstrom genannt, erzeugt ebenfalls ein Magnetfeld. Das Magnetfeld wirkt gegen das erste Magnetfeld und erzeugt so eine Widerstandskraft. Durch eine axiale Relativbewegung zwischen Leiter und Magnetfeld wird im Leiter ein umlaufender Wirbelstrom induziert. Diese resultierenden Wirbelströme bilden wiederum Magnetfelder die dem ursprünglichen Magnetfeld entgegenwirkt und die Bewegung des Leiters bremst. Erhöht sich die Geschwindigkeit wird der Wirbelstrom im Leiter erhöht, was zu einem stärkeren Magnetfeld führt, wodurch die Bewegung weiter und verstärkt gebremst wird.

In der EP 2 696 072 wird eine Schwingungsdämpferanordnung für Windkraftanlagen mit einem Massenpendel beschrieben. Das Massenpendel wird dabei im Schwingungsfall in vorzugsweise zwei Schwingungsvorrichtungen geführt, wobei es zu einer Bewegung durch ein plan angeordnetes Magnetfeld kommt, welches den dämpfenden Wirbelstrom erzeugt.

Die WO 2016/023628 beschreibt einen Wirbelstrom-Schwingungsdämpfer, der höhere Dämpfungsdichten erreichen kann und überdies richtungsunabhängig ist. Der Dämpfer besteht im Wesentlichen aus einem Zylinderrohr, welches eine Magnetanordnung aufweist, sowie einem im Inneren geführten und beweglichen Leiterrohr. Beide Rohre werden im Bereich der Magnetanordnung reibungsfrei geführt, wobei die Führung des Leiterrohrs gegenüber dem magnetischen Zylinderrohr in einer bevorzugten Ausführungsform durch einen Rollenvorrichtung außerhalb des funktionellen Bereiches erfolgt.

In der WO 2017/036581 wird ein insbesondere für Windkraftanlagen entwickelter Schwingungstilger vorgeschlagen, der ein Lauf- oder Fahrwerk, eine Tilger-Hauptmasse und eine gekrümmte Laufvorrichtung aufweist, wobei die Tilger-Hauptmasse am Fahrwerk angebracht und auf der Laufvorrichtung aus einer Mittellage oder Scheitelpunktlage heraus mittels Räder oder Rollen bewegbar ist. Dabei weist das Lauf- oder Fahrwerk bzw. die Tilger-Hauptmasse eine scheibenförmige, rotationssymmetrische Schwungmasse auf, die nur einen Bruchteil der Hauptmasse des Schwingungstilgers ausmacht und sich zusammen mit der Tilger-Hauptmasse bewegt. Das Rotationsmassenbauteil kann dabei eine wirbelstromerzeugende Einrichtung aufweisen, welche eine zusätzliche Dämpfung generiert.

Die WO 2019/154557 beschreibt einen ähnlichen Schwingungsdämpfer, bei dem die Rotationsschwungmasse unabhängig vom Laufwerk mittels einer neuartigen Riemenvorrichtung angetrieben wird, und zusätzlich zu der rotierenden Schwungmasse auch eine weitere Dämpfungsvorrichtung in Form eines Wirbelstromdämpfers vorgesehen ist.

Die WO 2019/029839 betrifft einen Schwingungstilger für Windkraftanlagen, welcher eine schwingende Masse an einem Pendelseil oder einer Pendelstange aufweist, wobei die Masse durch eine Erregerfrequenz in Schwingungen versetzt wurde und dann unter anderem durch einen Wirbelstrom-Rotationsdämpfer gedämpft werden kann.

Die EP 2746483 A1 beschreibt eine Schwingungstilgeranordnung für hohe, schlanke Bauwerke mit einer Tilgermasse, welche oberhalb einer Rad-Schieneanordnung angebracht ist. Die Schienen weisen dabei eine Krümmung auf, so dass Rückstellkräfte auftreten. Mindestens eines der Räder ist dabei mit einer Wirbelstromanordnung ausgestattet, welche mit der Schiene funktionell zusammenwirkt.

Das generelle Problem des Wirbelstromdämpfungsprinzips, insbesondere auch bei den oben beschriebenen Lösungen des Standes der Technik ist dessen Temperaturabhängigkeit. Durch den bei der Bewegung des Schwingungstilgers erzeugten Wirbelstrom wird nicht nur ein der Geschwindigkeit proportionaler Dämpfungseffekt durch Abbremsen der Bewegung des Tilgers generiert, sondern es entsteht auch erhebliche Wärme durch Umwandlung der Bewegungsenergie. Die vom Dämpfungssystem erzeugte Wärmeleistung kann dabei bei den in Windkraftanlagen eingesetzten Wirbelstromdämpfern im Nennbetrieb zwischen etwa 3 - 10 kW betragen. Die Wärme entsteht vorrangig in dem Leiterelement der Wirbelstromvorrichtung. Da jedoch die Leitfähigkeit der verfügbaren Wirbelstrom-Leiter (Aluminium, Kupfer, etc.) mit zunehmender Temperatur abnimmt, reduziert sich auch die Wirbelstromleistung deutlich. Ohne Maßnahmen zur Wärmeabfuhr und zur Temperaturkompensation würde sich bei den entstehenden Temperaturen von weit über 100°C im elektrischen Leiter der Vorrichtung ein Wirkungsgradverlust von bis zu etwa 50 % ergeben. Somit wäre die Tilger Funktion bei hohen Temperaturen ohne andere Maßnahmen nicht gewährleistet. Eine Erhöhung der Dämpfung durch größere Leiter-/Magnet-Elemente hätte den Nachteil, dass der Schwingungsdämpfer bei kalten Temperaturen ggf. zu stark gedämpft würde. Eine andere Möglichkeit den negativen Erwärmungseffekt auf den Wirkungsgrad der Wirbelstromleistung zu reduzieren besteht in einer ausreichenden Wärmeableitung. In der Regel wird im Stand der Technik aus unterschiedlichen Gründen das Leiterelement gegenüber einem stationären Magnetelement bewegt. So rotiert in den oben genannten Patentanmeldungen eine rotationssymmetrische Leiterscheibe um eine stationäre Magnetscheibe und die Wärme kann von der sich drehenden erhitzten Leitscheibe nur ungenügend abgeführt werden, wodurch immer ein Verlust an Dämpfung festzustellen ist.

Daher bestand die Aufgabe der vorliegenden Erfindung, einen Wirbelstrom-Schwingungsdämpfer mit hohem Wirkungsgrad über einen großen Temperaturbereich zur Verfügung zu stellen, der im Betrieb entstehende Wärme aber auch äußere größere Temperaturschwankungen selbstregulierend kompensiert, so dass keine nennenswerten Einbußen an der Dämpfungswirkung durch den Tilger auftreten.

Neben den temperaturadaptiven Eigenschaften bestand weiterhin die Aufgabe einen solchen Schwingungsdämpfer vorzusehen, welcher bereits bei kleinen auftretenden Schwingungsamplituden mit seiner Masse in Bewegung gerät, ohne eine nennenswerte Dämpfung zu erfahren.

Die gestellte Aufgabe wurde durch den unten beschriebenen und in den Ansprüchen charakterisierten temperaturadaptiven Wirbelstrom-Rotationsschwingungsdämpfer gelöst.

Gegenstand der Erfindung ist somit ein temperatur-adaptiver Wirbelstrom-Rotationsschwingungsdämpfer mit folgenden Merkmalen (i) eine Tilgermasse, welche mit auf mindestens einer Welle angebrachten Rädern oder Rollen ausgestattet und somit auf einer Führungsvorrichtung, beispielsweise einer Laufschiene für Rollen oder Räder, entsprechend den auftretenden Schwingungskräften bewegbar ist, (ii) mindestens eine rotationssymmetrische magnetische Scheibe, die mit der mindestens einer Welle verbunden ist und sich mit dieser bei Bewegung der Tilgermasse dreht, (iii) mindestens ein stationäres elektrisches Leiterelement, welches über einen Spalt mit der mindestens einen sich drehenden magnetischen Scheibe funktionell in Verbindung steht, und im Betrieb dadurch ein schwingungsdämpfender Wirbelstrom generiert wird,:(iv) das elektrische Leiterelement ist mit der Tilgermasse verbunden, wobei seine Fläche und Ausdehnung so dimensioniert ist, dass die mit ihm verbundene Tilgermasse als Kühlkörper fungiert, um durch den Wirbelstrom erzeugte Wärme abzuführen, (v) ein Verschiebeelement aufweist, welches die mindestens eine magnetische Scheibe auf der mindestens einen Welle axial so bewegen und verschieben kann, dass eine Änderung der Breite des Spaltes zwischen Leiterelement und magnetischer Scheibe eintritt, und (vi) ein temperaturabhängiges Ausdehnungsvolumen aufweist, welches auf das Verschiebeelement dadurch einwirkt, dass es einen Ausdehnungskoeffizienten besitzt, der größer ist als der des Verschiebungselementes, wodurch das Verschiebeelement (a) im Falle der Ausdehnung des besagten Volumens durch Temperaturerhöhung die besagte magnetische Scheibe aus einer Ausgangslage unter Verkleinerung des besagten Spaltes gegen eine Vorspannkraft axial in Richtung der Leiterplatte zieht, und (b) im Falle des Zusammenziehens des besagten Volumens bei Temperaturerniedrigung die besagte magnetische Scheibe unter Vergrößerung des Spaltes durch die Vorspannkraft wieder in Richtung der Ausgangslage schiebt.

Gegenstand der Erfindung ist weiterhin ein entsprechender Schwingungsdämpfer, welcher eine Leerlaufvorrichtung aufweist, die verhindert, dass die besagte magnetische Scheibe bei kleinen Bewegungen oder Amplituden der Tilgermasse sich zusammen mit der Welle und den Rollen oder Rädern dreht, wodurch eine unter diesen Bedingungen erwünschte geringere Dämpfung erreicht wird.

Gegenstand der Erfindung ist letztlich eine Windkraftanlage, welche mit mindestens einem erfindungsgemäßen Schwingungsdämpfer ausgestattet ist, zur selbständig temperaturregulierten Dämpfung von auftretenden Schwingungen in der Anlage.

Der erfindungsgemäße Schwingungsdämpfer ist vorgesehen für den Einsatz in hohen schlanken Bauwerken und Anlagen, insbesondere Windkraftanlagen.

Dazu wird die Tilgermasse mit Rädern oder Rollen auf einer oder mehreren Wellen auf eine Führungsvorrichtung für diese Rollen oder Räder, beispielsweise eine Schienenanordnung gesetzt. Auf dieser Führungsvorrichtung kann sich die Masse in einer vorbestimmten Ebene bzw. Richtung bewegen. Vorzugsweise ist die Führungsvorrichtung oder Laufschienenanordnung kreisförmig oder konkav gekrümmt, so dass die Masse bei durch äußere Kräfte ausgelöste Schwingungen der Anlage wie ein schwingendes Pendel sich in der vorbestimmten Richtung hin und her bewegen kann. Beispielsweise kann die Tilgermasse vier Räder oder Rollen an zwei Achsen oder Wellen aufweisen. An jedem Rad oder jeder Rolle kann ein erfindungsgemäßer Schwingungsdämpfer über die betreffende Welle vorgesehen sein. Es ist aber erfindungsgemäß auch ausreichend, nur an mindestens einem Rad an einer Welle einen solchen Schwingungsdämpfer vorzusehen.

Der erfindungsgemäße Schwingungsdämpfer ist wie folgt aufgebaut:
Der elektrische Leiter besteht aus einem elektrisch- und gleichzeitig wärmeleitenden Werkstoff, beispielsweise Aluminium oder Kupfer oder Legierungen aus diesen Metallen. Der elektrische Leiter ist vorzugsweise als Platte vorgesehen, die erfindungsgemäß nicht rotiert und mit der Tilgermasse verbunden ist. Dabei ist Größe und Ausdehnung der Platte so gewählt dass ein bestmöglicher Wärmeaustausch mit der Tilgermasse ermöglicht wird. Letztere dient also ganzheitlich als Kühlkörper. Vorzugsweise sind große Teile oder auch alle Teile der Oberfläche der Tilgermasse mit dem elektrischen Leitermaterial bedeckt oder steht mit diesem beispielsweise über Kühlrippen oder Heat Pipes in Verbindung. Aufgrund der großen Oberfläche kann so die Im Betrieb entstehende Wärme großflächig über Strahlung und Konvektion abgeführt werden.

Gleichzeitig ist durch diese Maßnahme die Wärmeabfuhr aufgrund der großen Masse sehr träge, sodass auch längere Leistungsspitzen nicht zu überhöhten Temperaturen führen. Zudem wirkt sich die große Trägheit vorteilhaft auf das Regelverhalten aus, da die zu verwendenden weiter unten näher beschriebene Regelelemente auch eine große Trägheit aufweisen, die aber damit geringer ist als die Trägheit der Masse, so dass die Regelung nur eine geringe Hysterese erfährt. Dies hat den Vorteil, dass der Weg der Regelelemente, welche erfindungsgemäß die Dämpfung temperaturabhängig anpassen, nicht oder nur gering hinter der Temperaturänderung nacheilt.

Ein weiterer Vorteil der an die Leiterplatte angebrachten Stahl-Tilgermasse ist, dass der Wirkungsgrad des Wirbelstroms durch den Stahl hinter der Leiterplatte zusätzlich erhöht wird.

Erfindungsgemäß wird das Magnetelement durch eine im Betrieb rotierende Vorrichtung, vorzugsweise eine rotationssymmetrische Scheibe, gebildet. Dabei können direkt entsprechend angeordnete Permanentmagnete Verwendung finden oder diese können auf eine Trägerscheibe angebracht und darauf verteilt sein.

Das Magnetelement, bzw. die Magnetscheibe ist unter Einhaltung eines im Wesentlichen gleichmäßigen Abstandes gegenüber dem Leiterelement positioniert. Der Abstand bzw. Spalt zum großflächigen Leiterelement bestimmt, wie bereits erwähnt, den Wirkungsgrad der Wirbelstromdämpfung. Mit größerem Abstand nimmt die Dämpfer-Leistung ab während sie mit kleinerem Abstand zunimmt. Wenn also durch Temperaturerhöhung im Betrieb der Wirkungsgrad, wie beschrieben, relativ abnimmt, kann dieser unerwünschte Effekt dadurch kompensiert werden, dass der Abstand zwischen Magnetelement und Leiterelement verringert wird. Umgekehrt, wenn durch Temperaturerniedrigung im Betrieb der Wirkungsgrad des Dämpfers relativ zunimmt, kann der Effekt dadurch kompensiert werden, dass der Abstand zwischen den beiden besagten Elementen vergrößert wird. Erfindungsgemäß geschieht dies selbstregulierend durch die im Folgenden beschriebenen Verschiebungs- und Ausdehnungselemente, so dass immer, unabhängig von der erfolgten Temperaturänderung, ein bestimmter Abstand zwischen den beiden Elementen und damit ein bestimmter Dämpfungswert eingehalten werden kann.

Die rotierende Magnetscheibe wird also erfindungsgemäß temperaturabhängig unter Einhaltung eines weitgehend gleichbleibenden vorbestimmten Dämpfungswertes verschoben, während gleichzeitig die durch den Wirbelstrom erzeugte Temperatur im Wesentlichen an dem stationären Leiterelement erzeugt und zur Tilgermasse abgeleitet wird.

Die temperaturabhängige Verschiebung des scheibenförmigen Magnetelements geschieht folgendermaßen: Die Magnetscheibe ist an einem Ende einer Welle angebracht, welche durch ein Rad am gegenüberliegenden Ende der Welle angetrieben wird und so die Magnetscheibe in Rotation versetzt. Die Magnetscheibe ist gleichzeitig gegenüber dem Leiterelement angeordnet, welches mit der bewegbaren Tilgermasse verbunden ist. Magnetscheibe und Leiterelement sind durch einen im Wesentlichen konstanten Spalt voneinander getrennt, Die Magnetscheibe ist weiterhin an einem Verschiebeelement angebracht, welches beispielsweise innen um die Welle herum angeordnet ist und im begrenzten Umfang entlang der Wellenachse hin und her geschoben werden kann. Damit wird auch die Magnetscheibe axial verschoben und somit den Abstand zum stationären Leiterelement verändert. Das Verschiebeelement ist zweckmäßigerweise rotationssymmetrisch um die Welle herum angeordnet und steht mit der magnetischen Scheibe in funktioneller Verbindung. Das Verschiebeelement wird durch eine in Richtung der Magnetscheibe wirkenden Vorspannkraft, beispielsweise in Form einer Feder- oder Hydraulikvorrichtung, die gemäß einer Ausführungsform der Erfindung weiter innen auf der Welle positioniert ist, nach außen gedrückt, so dass ein definierter Abstand der Magnetscheibe von dem Leiterelement vorliegt. Durch Verschiebung nach innen gegen die Vorspannkraft, wird der Spaltabstand der Magnetscheibe zum Leiterelement verkleinert und dadurch die Dämpfungswirkung erhöht. Die axiale Bewegung des Verschiebeelementes entlang der Welle kann beispielsweise mittels eines Gleitlagers erfolgen. Dabei kann die Verschiebung des Verschiebeelementes beispielsweise über ein Wälzlager und ein Stellschieberelement auf die magnetische Scheibe übertragen werden. Die Verschiebung des Verschiebeelements nach innen gegen die Vorspannkraft des Federelementes erfolgt nun durch ein temperaturabhängiges variables Ausdehnungs-/Verdrängungsvolumen, welches auch den Abstand der Magnetscheibe zum Leiterelement festlegt. Dies bedeutet, dass bei steigenden Temperaturen, sich das Material dieses Ausdehnungsvolumen stärker ausdehnt als das Material des mit ihm in Verbindung stehenden Verschiebeelements. Das Verschiebeelement wird durch die Kraft, welche durch die Ausdehnung erzeugt wird, unter axialer Verschiebung aus der Ausgangslage nach innen gegen die Vorspannkraft des Federelementes gedrückt-, wodurch auch die Magnetscheibe nach innen gezogen wird unter Verkleinerung des Spaltabstandes zwischen Magnetscheibe und Leiterelement. Im warmen/heißen Zustand wird also der Abstand verkleinert und damit die Dämpfung erhöht, während bei Temperaturabnahme eine Zusammenziehen des Ausdehnungsvolumens erfolgt, wodurch als Folge der permanent nach außen gerichteten Vorspannkraft eine Rückkehr der Magnetscheibe in den Ausgangszustand erfolgen kann. Somit stellt sich wieder ein größerer Spaltabstand ein, und die Dämpfung wird im Vergleich zum temperaturerhöhten Zustand verringert und nimmt die ursprünglichen Werte an. Bei noch kleineren Temperaturen als im Ausgangszustand zieht sich das Ausdehnungsvolumen noch weiter zusammen, so dass der Abstand der Magnetscheibe zur Leiterscheibe größer ist als im Ursprungszustand. Somit steigt die Dämpfung bei kälteren Temperaturen als im Ursprungszustand nicht weiter an.

Das Ausdehnungsvolumen kann beispielsweise entsprechend dem Verschiebelement rotationssymmetrisch um die Welle herum angeordnet sein; es kann aber auch anderswo am Tilger platziert sein, sofern es genügend Kontakt zur Tilgermasse hat, um die dort abgeleitete Wärme aufzunehmen, die im Wirbelstrombetrieb entstanden ist. Damit der Effekt ausreichend und wirkungsvoll ist, sollte das Ausdehnungsvolumens einen möglichst kurzen Weg zum Bereich der Wärmeentstehung der Wirbelstromelemente haben, entsprechend groß genug sein und einen Ausdehnungskoeffizienten aufweisen, welcher ein Vielfaches (mindestens 5-10 fach) des umgebenden Materials, insbesondere des Verschiebeelementes, sein. Entsprechende Materialen; wie beispielsweise Kunststoffe bzw. Polymermaterialen sind im Stand der Technik hinreichend bekannt. Viele Kunststoffe, wie Polypropylen, Polyethylen oder Silikonhaben einen ausreichend hohen (etwa 10-20 fachen) thermischen Ausdehnungskoeffizienten im Vergleich zu Stahl, aus dem das Verschiebeelement üblicherweise gefertigt ist.

Die vorgeschlagenen Konstruktion des Schwingungsdämpfers erfordert weiterhin, dass das Drehmoment der Welle auf die an das Verschiebeelement angebrachte Magnetscheibe übertragen werden kann. Hierzu ist eine Kupplungsvorrichtung zwischen Welle und Magnetscheibe vorgesehen. Die Kupplungsvorrichtung kann beispielsweise einen an sich starren Drehmomenthebel mit Lamellen, welche sich bei Verschiebung der Magnetscheibe aus der Ausgangslange elastisch verbiegen, oder aber bei Verwendung starrer Elemente, bzw. Drehmomenthebel zu diesem Zweck, Gleitbuchsen oder andere Gleitelemente umfassen.

In einer Ausführungsform der Erfindung ist zusätzlich eine Leerlaufvorrichtung für Magnetscheibe vorgesehen. Diese soll verhindern, dass die magnetische Scheibe bereits schon bei kleinen Bewegungen oder Amplituden der Tilgermasse sich zusammen mit der Welle und den Rollen oder Rädern dreht, um keine durch Wirbelstrom erzeugte Dämpfung zusätzlich zu ermöglichen.

Eine solche Leerlaufvorrichtung kann beispielsweise einen Drehmomenthebel mit definierten freien Drehwinkeln und elastischen Anschlagelementen umfassen. Dieser Drehmomenthebel kann sich so zusammen mit der sich drehenden Welle innerhalb des freien Drehwinkels bei den Pendelbewegungen der Tilgermasse auf der gekrümmten Laufschiene bewegen, ohne jedes Mal die Magnetscheibe voll mitzunehmen. Erst wenn die Anschlagpunkte erreicht werden, wird die Magnetscheibe angetrieben und generiert im Zusammenspiel mit dem Leiterelement den schwingungsdämpfenden Wirbelstrom.

Im Folgenden wird die Erfindung anhand der Zeichnungen näher beschrieben:

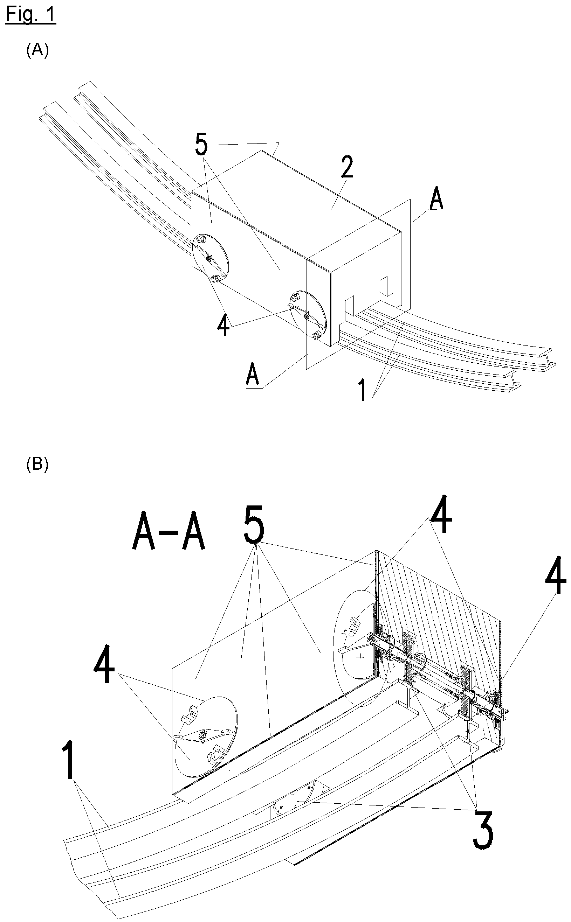

Fig. 1 (A)(B) zeigt zwei perspektivische Ansichten eines erfindungsgemäßen Schwingungsdämpfers auf einer Laufschienenvorrichtung (1). Der Schwingungsdämpfer selbst umfasst die Schwingmasse (2), welche auf vier Rädern (3) auf den Schienen bewegt wird. Die Schienen sind kreisförmig gekrümmt, so dass die als Wagen eingesetzte Tilgermasse in Richtung der Schienen (1) hin- und her rollen kann, entsprechend der an der Anlage angreifenden Schwingungskräfte. Die vier Rollen (3) sind auf Wellen gelagert, welche durch Öffnungen in der überkragenden Masse geführt sind und außen jeweils ein eigentliches rotationssymmetrisches Dämpferelement (4) aufweisen. Ein Rotationsdämpferelement (4) umfasst eine rotationssymmetrische Trägerscheibe (13) und Permanentmagnete (14).Die Rotationsdämpferelemente (4) drehen sich zusammen mit den Rollen/Rädern (3) über ihre gemeinsame Welle. Die Schwingmasse (2) ist oberflächig mit einer oder mehreren Leiterplatten (Aluminium) bedeckt. Im Bereich der Rotationselemente (4) ist die Leiterplatte parallel zwischen Masse (2) und Rotationselement (4) angeordnet und weist einen bezüglich der betreffenden Flächen im Wesentlichen konstanten Spaltabstand auf.

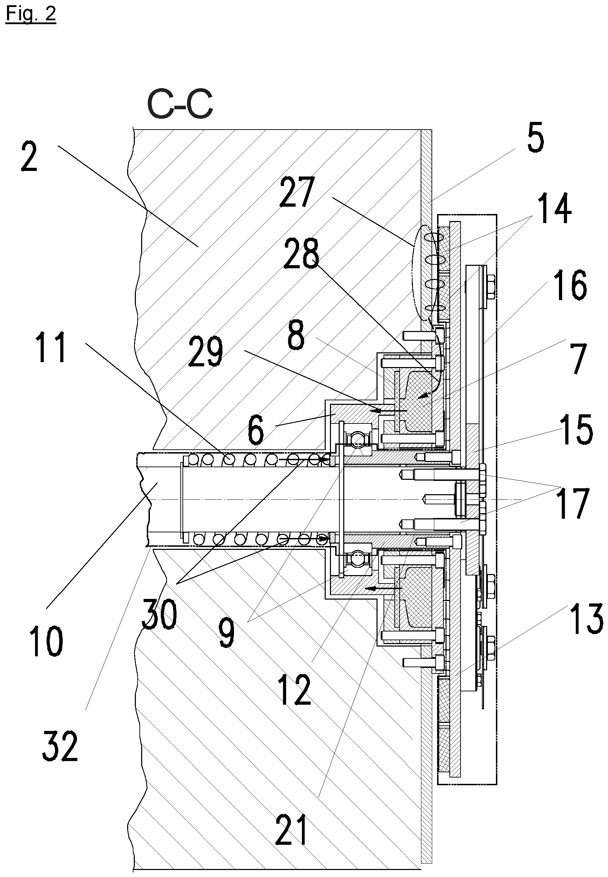

Fig. 2 zeigt einen Schnitt des Rotationselementes (4), seine Anordnung im erfindungsgemäßen Schwingungsdämpfer und Details seines konstruktiven Aufbaus. Eine Welle (10) führt durch einen Teile der Tilgermasse (2), Das links-ständige (innere) Ende der Welle ist mit einer Rolle (3) ausgestattet (nicht gezeigt), welche auf einer Laufschiene (1) (nicht gezeigt) bewegt wird. An der rechten Außenfläche der Tilgermasse ist ein Teil der großflächigen Leiterplatte (5) angebracht. Am rechts-ständigen (äußeren) Ende der Welle ist die Konstruktion aus Magnetscheibe (13)(14), Verschiebelement (6) und Ausdehnungsvolumen (7) abgebildet. Eine Trägerscheibe (13) ist mit einer Vielzahl von Permanentmagneten (14) bestückt. Die Trägerscheibe ist mit dem Verschiebungselement (6) verbunden und kann durch dieses axial verschoben werden. Das Verschiebelement (6) und damit die Magnetscheibe (13)(14) wird durch eine Vorspannkraft (30) in Form einer Feder (11) axial nach außen gedrückt bis zu einem durch das Ausdehnungsvolumen (7) definierten Anschlagpunkt. Dadurch wird ein Spaltabstand zwischen Magneten und der parallel angeordneten Leiterplatte (5) hergestellt, der durch Verschieben nach innen gegen die Federkraft (30) der Feder (11) verkleinert werden kann. Um die Welle herum ist in einer entsprechend geformten Aussparung der Tilgermasse (2) das Ausdehnungsvolumen (7) angeordnet. Dieses besteht im Wesentlichen aus einem temperaturabhängigem Polymer, welches bei Temperaturerhöhung eine signifikante Volumenvergrößerung erfährt und somit eine axial nach innen gerichtete Kraft auf das Verschiebelement ausübt und der Federkraft (30) der Feder (11) entgegenwirkt. Ist diese Kraft durch die Volumenvergrößerung des Polymers groß genug, so wird die Feder (11) zusammengedrückt und das Verschiebelement (6) im Bereich (29) nach innen geschoben. Dadurch wird die mit dem Verschiebeelement verbundene Magnetscheibe (13)(14) unter Verkleinerung des Spaltabstandes ebenfalls nach innen in Richtung der Leiterplatte (5) geschoben. Die für die Volumenvergrößerung notwendige Temperaturerhöhung erfolgt bei Rotation der Magnetscheibe im Bereich (27) zwischen Magneten (14) und Leiterplatte (5). Die im Bereich (27) erzeugte Wärme wird auf kurzem Wege (28) über die gut wärmeleitenden Metallelemente der Konstruktion in den Polymerraum abgeführt. Bei Abkühlung zieht sich das Ausdehnungsvolumen wieder zusammen, und es erfolgt durch die nunmehr wieder dominierende Federkraft (30) der Feder (11) eine Bewegung der betreffenden Bauteil nach außen in die entgegengesetzte Richtung. Damit bei Volumenvergrößerung das Polymer nicht unkontrolliert in das Verschiebelement (6) gedrückt wird, kann eine Sperrmembran (8) für den Fall vorgesehen werden, dass das Polymervolumen flüssig oder halbflüssig ist sofern. Falls ein Feststoff eingesetzt wird kann die Sperrmembran entfallen. Das Verschiebeelement (6) selbst besteht in der gezeigten Ausführungsform aus einem Stellschieber (12), einem Schiebe-Gleitlager (21) und einem Rotations-Wälzlager (9). Wegen der notwenigen Verschiebbarkeit der Magnetscheibe (13)(14) kann diese nicht unmittelbar und fest mit der Welle (10) verbunden werden. Um das Drehmoment der Welle (10) dennoch auf die Magnetscheibe (13)(14) zu übertragen, ist ein Kupplungselement vorgesehen, welches in der gezeigten Ausführungsform einen Drehmomenthebel (15), mehreren Kupplungslamellen (16) und einer Wellen-Befestigung (17) umfasst. Der Drehmomenthebel (15) ist dabei fest über die Verbindungselemente (17) mit der Welle (10) verbunden, und die elastischen Lamellen (16) sind mit der Außenseite der Trägerscheibe (13) verbunden. Bei Verschiebung der Magnetscheibe nach innen, bzw. in Richtung der Leiterplatte (5) (bei Temperaturerhöhung) verbiegen sich reversibel die besagten Lamellen.

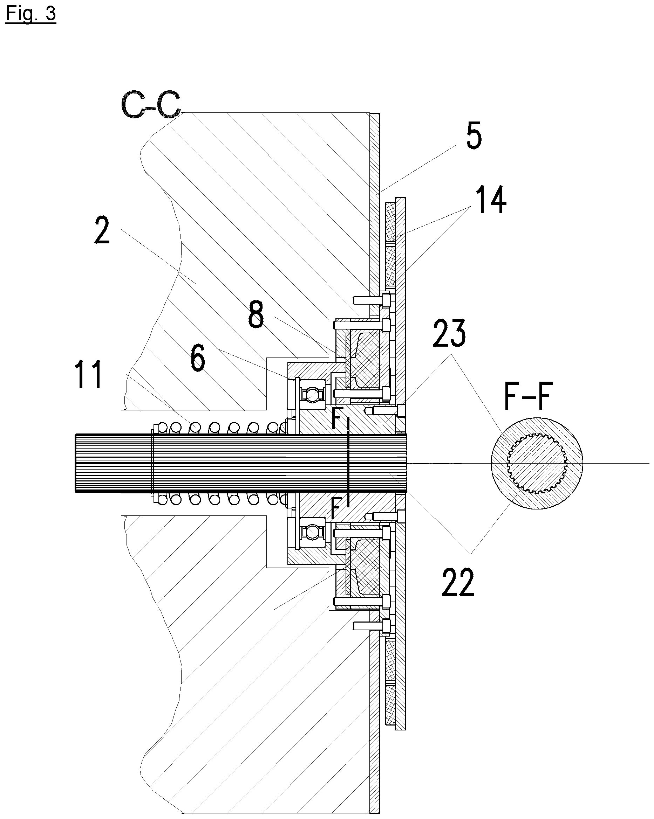

Fig. 3 entspricht weitgehend der Darstellung der Fig. 2 mit Ausnahme des Kupplungselementes (15)(16)(17), welches hier eine Zahnwellenkupplung ist. Die Drehmomentübertragung erfolgt in dieser Ausführungsform durch eine Zahnwelle (22) in Verbindung mit einer Zahnmuffe (23).

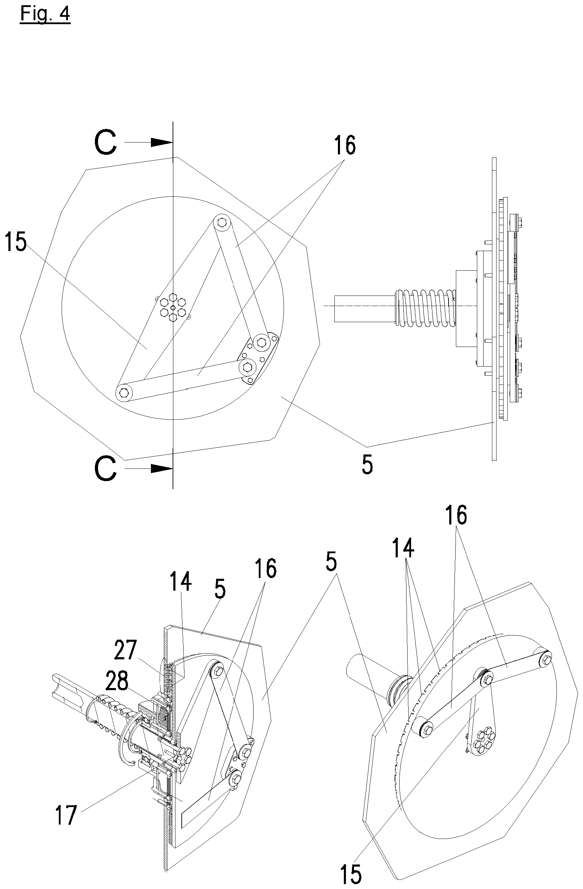

Fig. 4 bezieht sich ebenfalls auf Fig. 2 und zeigt in verschiedenen Ansichten die Lamellen-Kupplungsvorrichtung zur Übertragung des Drehmomentes im Detail.

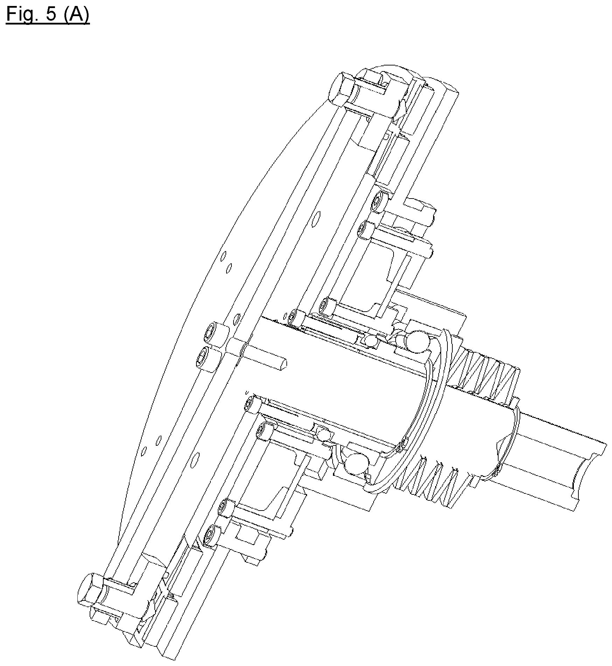

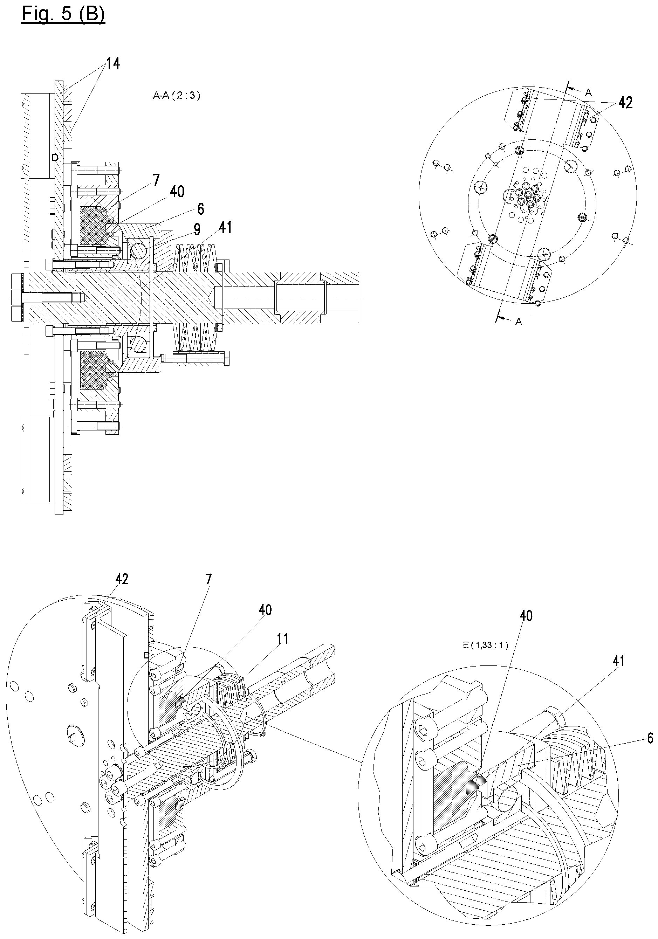

Fig. 5 (A) zeigt eine 3D-Ansicht des erfindungsgemäßen Schwingungsdämpfers (ohne Tilgermasse und Rollen), bei dem die Drehmomentübertragung zwar über ein Drehmomenthebel aber ohne elastisch verbiegbare Lamellen erfolgt. Stattdessen wird ein starrer Drehmomenthebel eingesetzt, der über eine axial ausgerichtete Gleitbuchsen-Lagerung mit der Magnetscheibe verbunden ist, die es ermöglicht, die Magnetscheibe entsprechend entlang der Welle zu verschieben.
   (B) zeigt eine analoge 3D-Sicht des erfindungsgemäßen Schwingungsdämpfers, bei dem der starre Drehmomenthebel (15) über ein in axialer Richtung weiches, durch ein in VerstellRichtung verschiebbares Gleitelement (42) oder durch ein in diese Richtung schub-weiches Elastomer-Element mit der Magnetscheibe verbunden ist, wodurch die Magnetscheibe entlang der Welle reversibel verschiebbar ist. In der gezeigten Version ist das Ausdehnungselement (7) als Festkörper mit hohem Ausdehnungskoeffizient ausgebildet. Dadurch entfällt die bei der Verwendung von Flüssigkeiten erforderliche Membran (8). In das Ausdehnungselement (7) ist ein metallisches Element (40) zur Übertragung der Schiebekraft integriert, welches über das Verschiebeelement (6) , das Wälzlager (9) die Kompensationsverschiebung gegen die Federkraft (30) ausübt. Um Winkelfehler auszugleichen, ist die Verbindungslinie zwischen (40) und dem Verschiebeelement (6) sphärisch ausgeführt. Somit ist bei Winkelfehlern zwischen dem Verschiebeelement (6) und dem Druckelement (40) ein kardanischer Ausgleich möglich.

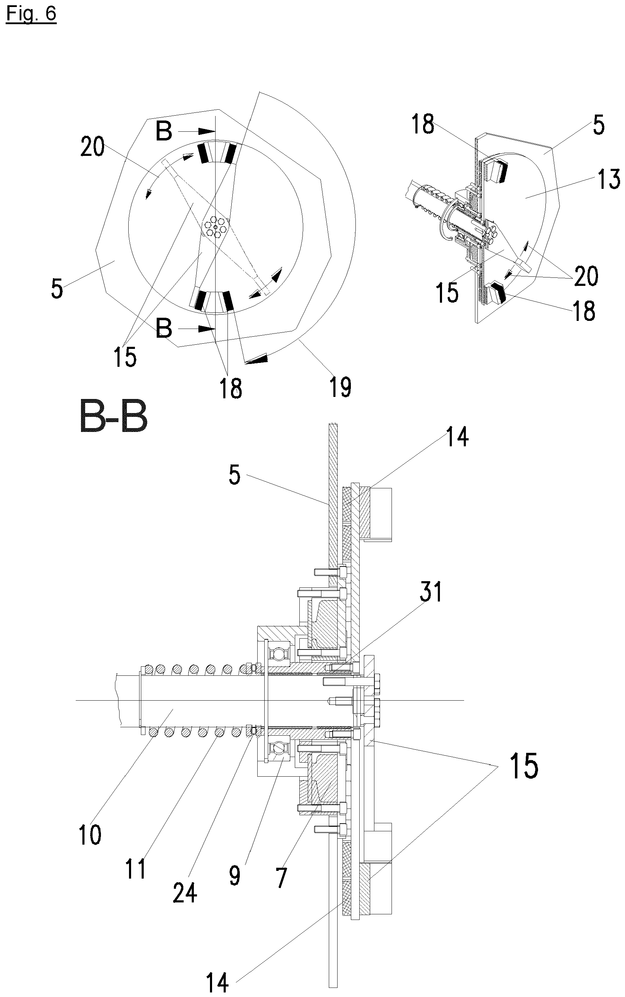

Fig. 6 zeigt verschiedene Ansichten des erfindungsgemäßen Schwingungsdämpfers in einer Ausführungsform wie oben beschrieben, welche jedoch zusätzlich eine Leerlaufvorrichtung (18)(19)(20) für die Magnetscheibe (13)(14) aufweist. Die Leerlaufvorrichtung wird durch mindestens einen, vorzugsweise zwei Anschlagpunkten (18)gebildet. In der Abbildung sind zwei gegenüberliegende Anschlagpunkte vorgesehen, welche druckelastisch sind, um den Anschlag abzufedern. Der Hebel (15) besitz somit einen freien Drehwinkel (19) und kann so bei seinen Pendelbewegungen im Betrieb eine frei Drehbewegung (20) vollziehen. Bei zwei Anschlagpunkten beträgt der freie Drehwinkel vorzugsweise etwa 150 - 160°. Es kann aber auch nur ein einziger Anschlagpunkt vorgesehen werden, so dass der Drehmomenthebel sich etwa knapp 360° freibewegen kann.

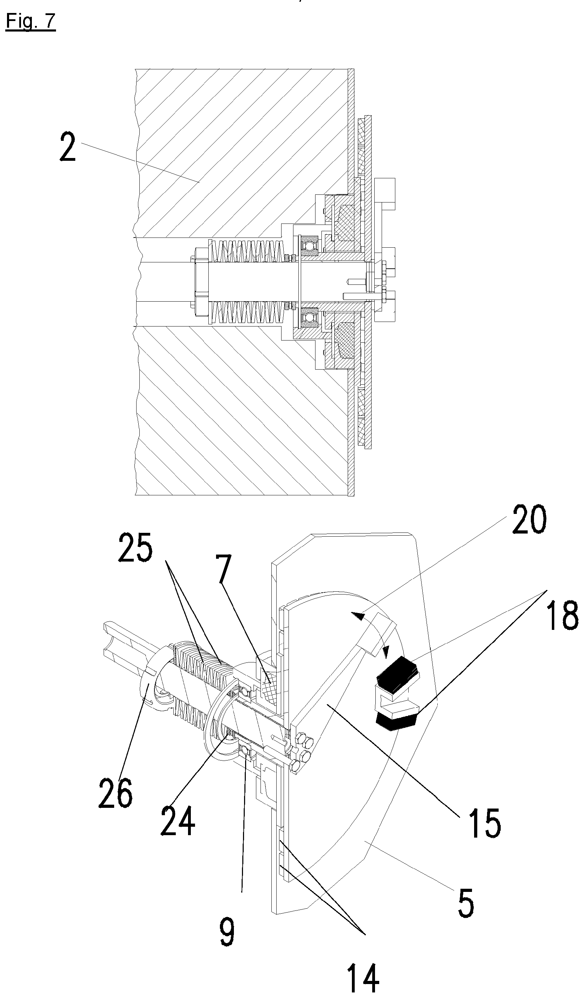

Fig. 7 zeigt die gleiche Ausführungsform des erfindungsgemäßen Schwingungsdämpfers wird in Fig. 6, also mit einer zusätzlichen Anschlagvorrichtung (18)(19)(20). Die Vorspannfeder (11) ist hier durch einen Tellerfeder-Stapel (25) ersetzt worden, der über eine Einstellschraube (26) in seiner Spannkraft reguliert werden kann.

## Patentansprüche

1. Temperatur-adaptiver Wirbelstrom-Rotationsschwingungsdämpfer umfassend
(i) eine Tilgermasse, welche mit auf mindestens einer Welle angebrachten Rädern oder Rollen ausgestattet und somit auf einer Führungsvorrichtung entsprechend den auftretenden Schwingungskräften bewegbar ist,
(ii) mindestens eine rotationssymmetrische magnetische Scheibe, die mit der mindestens einen Welle verbunden ist und sich mit dieser bei Bewegung der Tilgermasse dreht, und
(iii) mindestens ein stationäres elektrisches Leiterelement, welches über einen Spalt mit der mindestens einen sich drehenden magnetischen Scheibe funktionell in Verbindung steht und dadurch ein schwingungsdämpfender Wirbelstrom generiert wird, **dadurch gekennzeichnet, dass**
(iv) das elektrische Leiterelement (5) mit der Tilgermasse (2) verbunden ist, wobei seine Fläche und Ausdehnung so dimensioniert ist, dass die mit ihm verbundene Tilgermasse (2) als Kühlkörper fungiert, um durch den Wirbelstrom erzeugte Wärme abzuführen,
(v) ein Verschiebeelement (6) vorgesehen ist, welches die mindestens eine magnetische Scheibe (13)(14) auf der mindestens einen Welle (10) axial so bewegen und verschieben kann, dass eine Änderung der Breite des Spaltes zwischen Leiterelement (5) und magnetischer Scheibe (13)(14) eintritt, und
(vi) ein temperaturabhängiges Ausdehnungsvolumen (7) vorgesehen ist, welches auf das Verschiebeelement (6) dadurch einwirkt, dass es einen Ausdehnungskoeffizienten besitzt, der größer ist als der des Verschiebungselementes, wodurch das Verschiebeelement (6) (a) im Falle der Ausdehnung des Volumens (7) durch Temperaturerhöhung die besagte magnetische Scheibe (13)(14) aus einer Ausgangslage unter Verkleinerung des Spaltes gegen eine Vorspannkraft (30) axial in Richtung der Leiterplatte (5) zieht, und (b) im Falle des Zusammenziehens des Volumens (7) bei Temperaturerniedrigung die besagte magnetische Scheibe (13)(14) unter Vergrößerung des Spaltes durch die Vorspannkraft (30) wieder in Richtung der Ausgangslage schiebt.

2. Temperatur-adaptiver Wirbelstrom-Schwingungsdämpfer nach Anspruch 1, **dadurch gekennzeichnet, dass** das Verschiebeelement (6) mit dem Ausdehnungsvolumen (7) in Kontakt steht und beide Bauteile rotationssymmetrisch um die Welle (10) herum gegenüber der endständigen magnetischen Scheibe (13)(14) angeordnet sind.

3. Temperatur-adaptiver Wirbelstrom-Schwingungsdämpfer nach Anspruch 1 oder 2, **dadurch gekennzeichnet, dass** das Verschiebeelement (6) durch die Vorspannkraft (30) in Richtung des Ausdehnungsvolumens (7) und der magnetischen Scheibe (13)(14) gedrückt wird.

4. Temperatur-adaptiver Wirbelstrom-Schwingungsdämpfer nach einem der Ansprüche 1 - 3, **dadurch gekennzeichnet, dass** die Bewegung des Verschiebeelementes (6) über ein Gleitlager (21) auf der Welle (10) erfolgt.

5. Temperatur-adaptiver Wirbelstrom-Schwingungsdämpfer nach einem der Ansprüche 1 - 4, **dadurch gekennzeichnet, dass** die Verschiebung des Verschiebeelementes (6) über ein Wälzlager (9) und ein Stellschieberelement (12) auf die magnetische Scheibe (13(14) übertragen wird.

6. Temperatur-adaptiver Wirbelstrom-Schwingungsdämpfer nach einem der Ansprüche 1 - 5, **dadurch gekennzeichnet, dass** das für die Funktion erforderliche Drehmoment von der Welle (10) durch eine Kupplungsvorrichtung (15)(16)(17)(22)(23) auf die magnetische Scheibe (13)(14) übertragen wird.

7. Temperatur-adaptiver Wirbelstrom-Schwingungsdämpfer nach Anspruch 6, **dadurch gekennzeichnet, dass** die Kupplungsvorrichtung einen Drehmomenthebel (15) mit elastischen Lamellen (16) oder eine starren Drehmomenthebel (15) umfasst, welcher durch Gleitbuchsen oder Gleitelementen (42) geführt wird.

8. Temperatur-adaptiver Wirbelstrom-Schwingungsdämpfer nach einem der Ansprüche 1 - 7, **dadurch gekennzeichnet, dass** das elektrische Leiterelement (5) größer ist als die magnetische Scheibe (13)(14).

9. Temperatur-adaptiver Wirbelstrom-Schwingungsdämpfer nach Anspruch 8, **dadurch gekennzeichnet, dass** das elektrische Leiterelement (5) großflächig auf der Oberfläche der Tilgermasse angebracht ist.

10. Temperatur-adaptiver Wirbelstrom-Schwingungsdämpfer nach einem der Ansprüche 1 - 9, **dadurch gekennzeichnet, dass** er eine zusätzliche Kühlvorrichtung aufweist zur weiteren Abführung der durch Wirbelstrom erzeugten Wärme.

11. Temperatur-adaptiver Wirbelstrom-Schwingungsdämpfer nach einem der Ansprüche 1 - 10, **dadurch gekennzeichnet, dass** er eine Leerlaufvorrichtung (18)(19)(20) aufweist, welche verhindert, dass die magnetische Scheibe (13)(14) bei kleinen Bewegungen oder Amplituden der Tilgermasse (2) sich zusammen mit der Welle und den Rollen oder Rädern dreht, wodurch eine unter diesen Bedingungen erwünschte geringere Dämpfung erreicht wird.

12. Temperatur-adaptiver Wirbelstrom-Schwingungsdämpfer nach einem der Ansprüche 1 - 11, **dadurch gekennzeichnet, dass** die magnetische Scheibe aus einer Trägerscheibe (13) und darauf angebrachten Permanentmagneten (14) gebildet wird.

13. Temperatur-adaptiver Wirbelstrom-Schwingungsdämpfer nach einem der Ansprüche 1 - 12, **dadurch gekennzeichnet, dass** die Vorspannkraft (30) durch eine Federvorrichtung (11), einen Tellerfeder- Stapel (25) oder eine Hydraulikvorrichtung erbracht wird.

14. Temperatur-adaptiver Wirbelstrom-Schwingungsdämpfer nach einem der Ansprüche 1 - 13, **dadurch gekennzeichnet, dass** die Führungsvorrichtung für Tilgermasse (2) mindestens eine gekrümmte Laufschiene oder Laufbahn für die Rollen oder Räder aufweist, auf der sich die Tilgermasse bei Schwingungen pendelartig hin und her bewegen kann.

15. Windkraftanlage umfassend Turm, Rotor, Gondel und Generator, **dadurch gekennzeichnet, dass** sie einen Schwingungsdämpfer gemäß einem der Ansprüche 1 - 14 aufweist.

## Claims

1. Temperature-adaptive eddy current rotation oscillation damper, comprising
(i) a damping mass, which is equipped with wheels or rollers mounted on at least one shaft and is thus movable on a guide device according to the occurring oscillation forces,
(ii) at least one rotationally symmetric magnetic disk, which is connected to the at least one shaft and rotates therewith when the damping mass moves, and
(iii) at least one stationary electrical conductor element, which is functionally connected to the at least one rotating magnetic disk via a gap, consequently generating an oscillation-damping eddy current, **characterized in that**
(iv) the electrical conductor element (5) is connected to the damping mass (2), its surface area and size being selected such that the damping mass (2) connected thereto functions as a heat sink for dissipating heat generated by the eddy current,
(v) a displacement element (6) is provided, which can axially move and displace the at least one magnetic disk (13)(14) on the at least one shaft (10) such that the width of the gap between the conductor element (5) and the magnetic disk (13)(14) is changed, and
(vi) a temperature-dependent expansion volume (7) is provided, which acts on the displacement element (6) by having an expansion coefficient which is greater than that of the displacement element, as a result of which the displacement element (6), (a) upon expansion of the volume (7) owing to an increase in temperature, pulls the magnetic disk (13)(14) out of a starting position, counter to a preloading force (30), axially toward the conductor plate (5), thus reducing the gap, and, (b) upon contraction of the volume (7) when the temperature drops, pushes the magnetic disk (13)(14) back toward the starting position, using the preloading force (30), thus enlarging the gap.

2. Temperature-adaptive eddy current oscillation damper according to claim 1, **characterized in that** the displacement element (6) is in contact with the expansion volume (7), and both components are arranged rotationally symmetrically around the shaft (10), opposite the magnetic disk (13)(14) at the end thereof.

3. Temperature-adaptive eddy current oscillation damper according to claim 1 or 2, **characterized in that** the displacement element (6) is pressed by the preloading force (30) toward the expansion volume (7) and the magnetic disk (13)(14).

4. Temperature-adaptive eddy current oscillation damper according to any of claims 1 - 3, **characterized in that** the movement of the displacement element (6) is effected via a plain bearing (21) on the shaft (10).

5. Temperature-adaptive eddy current oscillation damper according to any of claims 1 - 4, **characterized in that** the displacement of the displacement element (6) is transmitted to the magnetic disk (13)(14) via a rolling bearing (9) and an actuating slide element (12).

6. Temperature-adaptive eddy current oscillation damper according to any of claims 1 - 5, **characterized in that** the torque required for the function is transmitted from the shaft (10) to the magnetic disk (13)(14) by means of a coupling device (15)(16)(17)(22)(23).

7. Temperature-adaptive eddy current oscillation damper according to claim 6, **characterized in that** the coupling device comprises a torque lever (15) with resilient lamellae (16), or a rigid torque lever (15) which is guided by sliding bushings or sliding elements (42).

8. Temperature-adaptive eddy current oscillation damper according to any of claims 1 - 7, **characterized in that** the electrical conductor element (5) is larger than the magnetic disk (13)(14).

9. Temperature-adaptive eddy current oscillation damper according to claim 8, **characterized in that** the electrical conductor element (5) is mounted over a large area on the surface of the damping mass.

10. Temperature-adaptive eddy current oscillation damper according to any of claims 1 - 9, **characterized in that** it has an additional cooling device for further dissipation of the heat generated by eddy current.

11. Temperature-adaptive eddy current oscillation damper according to any of claims 1 - 10, **characterized in that** it has an idle device (18)(19)(20), which prevents the magnetic disk (13)(14) from rotating together with the shaft and the rollers or wheels upon small movements or amplitudes of the damping mass (2), thereby achieving lower damping as desired under these conditions.

12. Temperature-adaptive eddy current oscillation damper according to any of claims 1 - 11, **characterized in that** the magnetic disk is formed by a carrier disk (13) and permanent magnets (14) attached thereto.

13. Temperature-adaptive eddy current oscillation damper according to any of claims 1 - 12, **characterized in that** the preloading force (30) is provided by a spring device (11), a disk-spring stack (25), or a hydraulic device.

14. Temperature-adaptive eddy current oscillation damper according to any of claims 1 - 13, **characterized in that** the guide device for the damping mass (2) has at least one curved track or raceway for the rollers or wheels on which the damping mass can move back and forth like a pendulum in the event of oscillations.

15. Wind turbine comprising a mast, rotor, nacelle, and generator,
**characterized in that** it comprises an oscillation damper according to any of claims 1 - 14.

## Revendications

1. Amortisseur de vibrations rotatif à courants de Foucault adaptatif en température comprenant
(i) une masse d'amortissement qui est équipée de roues ou de galets montés sur au moins un arbre et qui peut ainsi être déplacée sur un dispositif de guidage en fonction des forces vibratoires qui se produisent,
(ii) au moins un disque magnétique à symétrie de révolution qui est relié à l'au moins un arbre et qui tourne avec celui-ci lorsque la masse d'amortissement se déplace, et
(iii) au moins un élément conducteur électrique stationnaire qui est en liaison fonctionnelle avec l'au moins un disque magnétique rotatif par l'intermédiaire d'un entrefer et qui génère ainsi un courant de Foucault amortissant les vibrations,
**caractérisé en ce que**
(iv) l'élément conducteur (5) électrique est relié à la masse d'amortissement (2), dans lequel sa surface et son étendue sont dimensionnées de sorte que la masse d'amortissement (2) qui est reliée à celui-ci fonctionne en tant que corps de refroidissement afin d'évacuer la chaleur générée par le courant de Foucault,
(v) un élément de coulissement (6) est prévu, lequel peut déplacer et faire coulisser axialement l'au moins un disque magnétique (13)(14) sur l'au moins un arbre (10) de sorte qu'il se produit une modification de la largeur de l'entrefer entre l'élément conducteur (5) et le disque magnétique (13)(14), et
(vi) un volume de dilatation (7) dépendant de la température est prévu, lequel agit sur l'élément de coulissement (6) par le fait qu'il possède un coefficient de dilatation qui est supérieur à celui de l'élément de coulissement, moyennant quoi l'élément de coulissement (6) (a) dans le cas de la dilatation du volume (7) par une augmentation de la température, tire axialement ledit disque magnétique (13)(14) vers la carte à circuit imprimé (5) à l'encontre d'une force de précontrainte (30) à partir d'une position initiale en réduisant l'entrefer, et (b) dans le cas de la contraction du volume (7) lors d'une diminution de la température, pousse ledit disque magnétique (13)(14) à nouveau en direction de la position initiale en augmentant l'entrefer sous l'effet de la force de précontrainte (30).

2. Amortisseur de vibrations à courants de Foucault adaptatif en température selon la revendication 1, **caractérisé en ce que** l'élément de coulissement (6) est en contact avec le volume de dilatation (7) et les deux composants sont disposés de manière symétrique en rotation autour de l'arbre (10) par rapport au disque magnétique (13)(14) terminal.

3. Amortisseur de vibrations à courants de Foucault adaptatif en température selon la revendication 1 ou 2, **caractérisé en ce que** l'élément de coulissement (6) est poussé par la force de précontrainte (30) en direction du volume de dilatation (7) et du disque magnétique (13)(14).

4. Amortisseur de vibrations à courants de Foucault adaptatif en température selon l'une des revendications 1 à 3, **caractérisé en ce que** le déplacement de l'élément de coulissement (6) est effectué par l'intermédiaire d'un palier lisse (21) sur l'arbre (10).

5. Amortisseur de vibrations à courants de Foucault adaptatif en température selon l'une des revendications 1 à 4, **caractérisé en ce que** le coulissement de l'élément de coulissement (6) est transmis au disque magnétique (13)(14) par l'intermédiaire d'un palier à rouleaux (9) et d'un élément formant coulisseau de réglage (12).

6. Amortisseur de vibrations à courants de Foucault adaptatif en température selon l'une des revendications 1 à 5, **caractérisé en ce que** le couple de rotation nécessaire au fonctionnement est transmis de l'arbre (10) au disque magnétique (13)(14) au moyen d'un dispositif d'accouplement (15)(16)(17)(22)(23).

7. Amortisseur de vibrations à courants de Foucault adaptatif en température selon la revendication 6, **caractérisé en ce que** le dispositif d'accouplement comprend un levier de couple de rotation (15) comportant des lamelles élastiques (16) ou un levier de couple de rotation (15) rigide qui est guidé par des douilles de glissement ou des éléments de glissement (42).

8. Amortisseur de vibrations à courants de Foucault adaptatif en température selon l'une des revendications 1 à 7, **caractérisé en ce que** l'élément conducteur (5) électrique est plus grand que le disque magnétique (13)(14).

9. Amortisseur de vibrations à courants de Foucault adaptatif en température selon la revendication 8, **caractérisé en ce que** l'élément conducteur (5) électrique est disposé sur une grande superficie sur la surface de la masse d'amortissement.

10. Amortisseur de vibrations à courants de Foucault adaptatif en température selon l'une des revendications 1 à 9, **caractérisé en ce qu'**il présente un dispositif de refroidissement supplémentaire permettant d'évacuer davantage la chaleur générée par le courant de Foucault.

11. Amortisseur de vibrations à courants de Foucault adaptatif en température selon l'une des revendications 1 à 10, **caractérisé en ce qu'**il présente un dispositif de marche à vide (18)(19)(20) qui empêche le disque magnétique (13)(14) de tourner conjointement avec l'arbre et les galets ou roues lors de petits mouvements ou de petites amplitudes de la masse d'amortissement (2), moyennant quoi un amortissement plus faible souhaité dans ces conditions est obtenu.

12. Amortisseur de vibrations à courants de Foucault adaptatif en température selon l'une des revendications 1 à 11, **caractérisé en ce que** le disque magnétique est formé d'un disque de support (13) et d'aimants permanents (14) montés sur celui-ci.

13. Amortisseur de vibrations à courants de Foucault adaptatif en température selon l'une des revendications 1 à 12, **caractérisé en ce que** la force de précontrainte (30) est fournie par un dispositif à ressorts (11), un empilement de rondelles Belleville (25) ou un dispositif hydraulique.

14. Amortisseur de vibrations à courants de Foucault adaptatif en température selon l'une des revendications 1 à 13, **caractérisé en ce que** le dispositif de guidage pour la masse d'amortissement (2) présente au moins un rail de roulement ou une voie de roulement courbe pour les galets ou les roues, sur lequel la masse d'amortissement peut se déplacer en va-et-vient à la manière d'un pendule lors de vibrations.

15. Éolienne comprenant une tour, un rotor, une nacelle et un générateur, **caractérisée en ce qu'**elle présente un amortisseur de vibrations selon l'une des revendications 1 à 14.
